Europäisches Patentamt

European Patent Office

Office européen des brevets

(19)

(11) Veröffentlichungsnummer: **0 237 046**
**B1**

(12) **EUROPÄISCHE PATENTSCHRIFT**

(45) Veröffentlichungstag der Patentschrift:
**20.09.89**

(51) Int. Cl.⁴: **F16C 7/00**

(21) Anmeldenummer: **87103496.3**

(22) Anmeldetag: **11.03.87**

(54) **Anschlussgarnitur zum axialen Einleiten von Zug- und Druckkräften in Stäbe aus Faserverbundwerkstoff.**

(30) Priorität: **12.03.86 DE 3608228**

(43) Veröffentlichungstag der Anmeldung:
**16.09.87 Patentblatt 87/38**

(45) Bekanntmachung des Hinweises auf die Patenterteilung:
**20.09.89 Patentblatt 89/38**

(84) Benannte Vertragsstaaten:
**AT FR GB IT NL**

(56) Entgegenhaltungen:
**EP-A- 0 028 978**
**EP-A- 0 029 093**
**EP-A- 0 059 163**
**CH-A- 647 833**
**DE-A- 3 408 650**
**GB-A- 1 551 223**
**GB-A- 2 051 305**

(73) Patentinhaber: **Deutsche Forschungs- und Versuchsanstalt für Luft- und Raumfahrt e.V., Linder Höhe Postfach 90 60 58, D-5000 Köln 90(DE)**

(72) Erfinder: **Schütze, Rainer Dipl.-Ing., Am Kiel 14A, D-3300 Braunschweig(DE)**
Erfinder: **Kämpf, Peter, Wöhlerstrasse 4, D-4150 Krefeld(DE)**

(74) Vertreter: **Gralfs, Harro, Dipl.-Ing., Am Bürgerpark 8, D-3300 Braunschweig(DE)**

EP 0 237 046 B1

**Beschreibung**

Die Erfindung bezieht sich auf eine Anschlußgarnitur nach dem Oberbegriff des Patentanspruches 1.

Die axiale Einleitung von Zug- und Druckkräften in Stäbe mit einer rohrförmigen Wandung aus Faserverbundwerkstoffen mit wenigstens einer Lage aus achsparallelen unidirektionalen Fasern bereitet erhebliche Schwierigkeiten, insbesondere hinsichtlich der Übertragung von Zugkräften von dem Anschlußelement in den Stab.

Bei einer bekannten Anschlußgarnitur der eingangs erwähnten Art werden die Formkörper mit einem ringförmigen Absatz in die Enden eines vorgefertigten Kernrohres eingesetzt, das eine Lage von unidirektionalen Fasern aufweist. Der Formkörper ist mit einer stark gerundeten Schulter versehen, auf der ein Kranz schräg nach außen gerichteter und mit dem Formkörper fest verbundener Stifte angeordnet ist. Auf den durch Einfügen der Formteile in das Kernrohr vorkonfektionierten Stab wird dann eine äußere Bewicklung mit achsparallelen UD-Fasern aufgebracht. Die unidirektionalenFasern werden dabei jeweils über die Stifte auf dem einen Formkörper und von dort über die Stifte am anderen Formkörper geführt. Auf diese Weise entsteht über die so gebildeten Wickelköpfe eine formschlüssige Verbindung der UD-Fasern mit beiden Formkörpern. Auf die Bewicklung mit UD-Fasern wird dann eine Lage aus Umfangsfasern aufgebracht. Zur Übertragung von Druckkräften ist eine gesonderte, auf das Formstück aufgeschraubte Kappe aus Metall vorgesehen, die das Ende der äußeren Bewicklung übergreift und mit ihrer Stirnwand zur Übertragung von Druckkräften auf den Wickleköpfen der Bewicklung aufliegt. Die Kappe ist mit der äußeren Bewicklung verklebt (CH-PS 647 833). Die Herstellung eines Stabes mit einer derartigen Anschlußgarnitur erfordert eine relativ komplizierte Wickeltechnik für das Aufbringen der äußeren Bewicklung nach der Anbringung der Formkörper an dem als Wickelkern verwendeten Kernrohr.

Es sind weiter Anschlußgarnituren bekannt, bei denen der Formkörper einen konischen Abschnitt aufweist, der zur Anschlußseite über einen Absatz mit größerer Konizität in einen zylindrischen Abschnitt übergeht. Die Kappe ist auf den Formkörper aufschraubbar und mit einer der äußeren Kontur des Formkörpers entsprechenden Innenkontur versehen (GB-PS 1 551 223). Die mit einer solchen Anschlußgarnitur versehenen Streben werden wiederum auf einem Kernrohr, in das an beiden Enden die Formelemente mit einem Absatz eingreifen, gewickelt.

Es sind weiter Strebenelemente bekannt (Firmenschrift "Entwicklung, Fertigung und Test der Primärstruktur für den Satelliten SPAS-01" der Firma Messerschmitt-Bölkow-Blohm GmbH, 1982-018, DGLR Symposium, Stuttgart 26. und 27. Mai 1982, Abschnitt 3), die aus vorgefertigten Rohren aus in einer Kunstharzmatrix eingebetteten Kohlenstoffasern mit wenigstens einer Lage aus UD-Fasern bestehen, die stumpf auf Länge geschnitten und an ihren Enden mit Anschlußgarnituren versehen sind, die einen jeweils das Rohrende mit einem rohrförmigen Abschnitt übergreifenden metallischen Ring mit einer radialen Anschlagschulter für das Rohrende und einen inneren Stützring aufweisen, zwischen denen das Rohrende eingeschlossen ist. Die Zugkräfte werden hierbei über eine Verklebung des äußeren Ringes mit dem Rohr und damit durch reine Scherkräfte übertragen.

Aufgabe der Erfindung ist es, eine Anschlußgarnitur der eingangs erwähnten Art in Leichtbauweise so auszubilden, daß mit ihm vorgefertigte und auf Länge geschnittene Stäbe mit rohrförmiger Wandung aus Faserverbundwerkstoffen in einfacher Weise konfektioniert werden können, wobei über die Anschlußgarnitur hohe Zugkräfte übertragbar sein sollen.

Diese Aufgabe wird gelöst durch die im kennzeichnenden Teil des Anspruches 1 herausgestellten Merkmale.

Zweckmäßige Ausgestaltungen sind Gegenstand der Unteransprüche.

Die Erfindung ist in der Zeichnung in zwei Ausführungsbeispielen veranschaulicht und im nachstehenden im einzelnen anhand der Zeichnung beschrieben. Es zeigen jeweils im Längsschnitt

Fig. 1 ein Ende eines Stabes mit einer Anschlußgarnitur in einer ersten Ausführungsform.
Fig. 2 ein Ende eines Stabes mit einer Anschlußgarnitur in einer zweiten Ausführungsform.

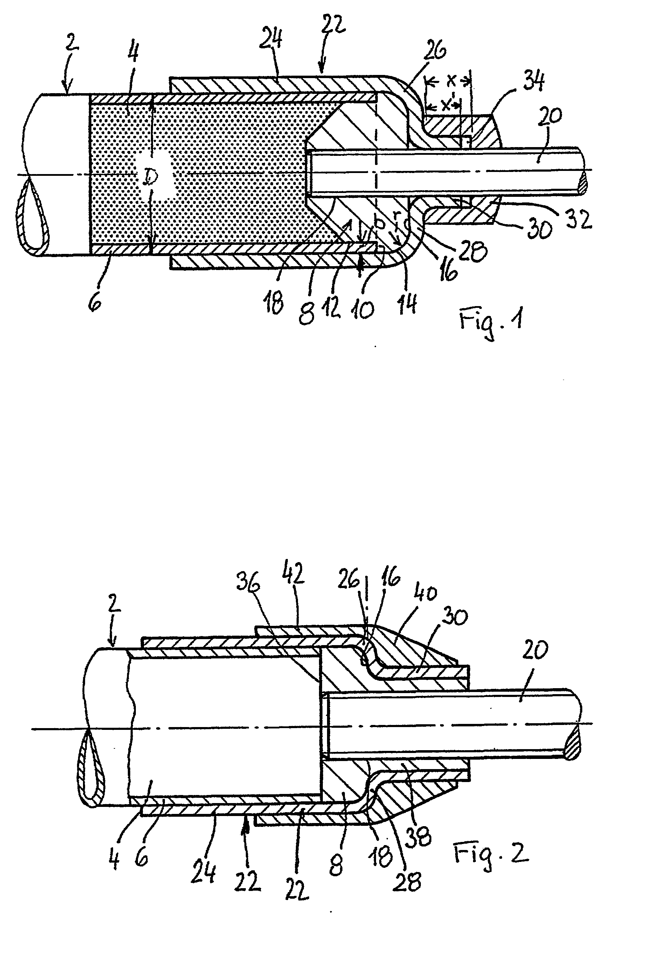

In Fig. 1 ist das Ende eines Stabes 2 dargestellt, der hier auf einem formstabilen Schaumstoffkern 4 mit rundem Querschnitt eine rohrförmige Wandung 6 aus einem Faserverbundwerkstoff aufweist. Die rohrförmige Wandung 6 enthält eine Schicht achsparalleler unidirektionaler Fasern, auf denen vorzugsweise außen ein Fasergeflechtschlauch aufgebracht ist. Beide Faserschichten sind in einer Kunstharzmatrix eingebettet. Als Fasern werden zur Erzielung eines geringen Gewichtes bzw. hoher Festigkeitswerte vorzugsweise Kohlenstoffasern verwendet. Hieraus ergeben sich auch sehr dünne Wandstärken für die rohrförmige Wandung 6 des Stabes.

Die in Fig. 1 dargestellte Anschlußgarnitur, über die in den Stab Zug- und Druckkräfte einleitbar sind, weist einen biegesteifen Formkörper 8 auf, der aus Metall, aber auch aus multidirektional geschichteten CFK-Laminat bestehen kann. Der als Rotationskörper ausgebildete Formkörper 8 hat einen größten Durchmesser, der dem Außendurchmesser D des Stabes 2 entspricht. Der Formkörper ist an seinem dem Stab zugewandten inneren Ende mit einem zylindrischen Absatz 12 mit einer Ringschulter 10 versehen, die eine radiale Breite b entsprechend der Wandstärke der rohrförmigen Wandung 6 des Stabes 2 hat. Mit dem Absatz 12 ist der Formkörper in das Ende des Stabes 2 so einsetzbar, daß die stirnseitige Endfläche der rohrförmigen Wandung des Stabes vollflächig gegen die Schulter 10 anliegt.

An seinem äußeren Ende ist der Formkörper 8 mit eine quer zu seiner Achse liegenden Endwand 16 versehen. Als Übergang zu dem angrenzenden Abschnitt des Formkörpers mit dem Durchmesser D ist eine gekrümmte Kante 14 vorgesehen mit einem Radius r. Der Formkörper 8 ist weiter mit einer axialen Gewindebohrung 18 zur Aufnahme einer Anschlußbolzens 20 versehen. Zur Gewichtsersparnis ist der Formkörper 8 an seinem inneren Ende mit einer konischen Fase versehen.

Die Anschlußgarnitur weist weiter eine Kappe 22 auf, die einen zylinderrohrförmigen Mantel 24 aufweist, der mit einer Krümmung 26 mit einem Innenradius entsprechend dem Radius r der gekrümmten Kante 14 des Formstückes 8 in eine quer zur Achse liegende Stirnwand 28 mit einer koaxialen Öffnung übergeht. Die axiale Länge des Kappenmantels 24 ist so bemessen, daß über eine Klebeverbindung die auf die Anschlußgarnitur wirkenden Zugkräfte als Scherkräfte in den Stab überleitbar sind. An die Öffnung in der Endwand 28 der Kappe 22 angrenzend ist ein ringförmiger Kragen 30 vorgesehen, der aus einem Stück mit der Kappe besteht und einen Innendurchmesser d hat, der dem Außendurchmesser des Gewindes des Gewindebolzens 20 entspricht. Dieser ringförmige Kragen 30 kann mit einem Innengewinde versehen sein, das dem Gewinde des Anschlußbolzens 20 entspricht. Der Kragen 30 wird von einer Schraubkappe 32 übergriffen, die auf den Gewindebolzen 20 aufschraubbar ist. Diese Kappe ist mit einer Ausnehmung 34 versehen, deren axiale Tiefe x größer ist als die axiale Länge xE des Kragens 30. Der Innendurchmesser der Kappe entspricht dem Außendurchmesser des Kragens 30. Die Endfläche des Mantels der Kappe 32 preßt die Stirnwand 28 der Kappe 22 gegen die Endwand 16 des Formkörpers 8. Gleichzeitig wirkt die Kappe 22 mit ihrem Mantel radialen Aufweitungskräften entgegen, die bei hohen Zugkräften auftreten.

Die Kappe 22 besteht aus einer oder mehreren Lagen eines in eine Kunstharzmatrix eingebetteten Fasergeflechtschlauches, wobei als Fasern vorzugsweise Kohlenstoffasern Anwendung finden. Die Formgebung erfolgt dabei auf einem Formdorn, der zur Formung des Kragens mit einem Gewindebolzen versehen sein kann, mit dem bei der Formgebung das oben erwähnte Innengewinde im Kragen 30 der Kappe 22 abgebildet werden kann. Die Krümmung 26 mit dem Radius r ist so zu bemessen, daß ein Brechen der Fasern vermieden wird. Eine saubere Außenoberfläche der Kappe und die Vermeidung von Lufteinschlüssen in der Kappe kann dadurch erreicht werden, daß nach dem Aufbringen der mit Kunstharz getränkten Fasergeflechtschläuche auf den Formdorn auf diese ein Schrumpfschlauch aufgebracht wird, der beim Aufschrumpfen eine enge Anlage und Anpressung des Fasergeflechtschlauches an dem Formdorn sicherstellt und mit dem es auch auf einfache Weise möglich ist, genau reproduzierbar den ringförmigen Kragen 30 zu formen.

Bei der Montage der Anschlußgarnitur wird aus dem entlang der gestrichelten Linie 36 quer durchtrennten Stab 2 über einen entsprechenden Abschnitt der Hartschaumkern 4 entfernt. Es wird dann in das Stabende der Formkörper 8 eingeklebt, wobei das Ende des rohrförmigen Abschnittes sich vollflächig gegen die Schulter 10 abstützt unter gleichzeitiger radialer Führung über den Absatz 12. Es wird dann unter Beifügung von Kleber die Kappe 22 auf das Stabende aufgebracht. Anschließend wird die Schraubkappe 32 auf den Gewindebolzen aufgeschraubt und so weit angezogen, daß die Stirnwand 28 der Kappe 22 zur Anlage an der äußeren Endwand des Formkörpers 8 kommt.

Die in Fig. 2 dargestellte Ausführungsform der Anschlußgarnitur entspricht im Grundsatz der vorstehend beschriebenen. Es werden daher im nachstehenden nur die Abweichungen im einzelnen beschrieben, bezüglich deren sich diese Ausführungsform von der nach Fig. 1 entscheidet. Der Formkörper 8 ist bei dieser Ausführungsform an seiner Rückseite mit einer ebenen Endfläche versehen, die quer zur Achse der Gewindebohrung 18 liegt. Die Endfläche der rohrförmigen Wandung 6 des Stabes 2 stößt stumpf gegen diese Endfläche 36 und wird radial zu dieser durch die Kappe 22 geführt.

Zur Erzielung einer ausreichenden Gewindelänge ist der Formkörper an der der Endfläche gegenüberliegenden Seite mit einem zylindrischen Vorsprung 38 versehen. Die äußere Endwand 16 des Formkörpers, an der die Kappe 22 mit ihrer Stirnwand 28 anliegt, erstreckt sich hier radial nach innen bis an den Vorsprung 38.

Auf dem Kragen 30 ist bei dieser Ausführungsform eine Umfangswicklung 40 aus in eine Kunstharzmatrix eingebetteten Kohlefasern aufgebracht, die die radialen Aufweitungskräfte aufnimmt, die bei hohen Zugkräften auf den Kragen insbesondere im Bereich des Überganges in die Stirnwand 28 auftreten.

Die Umfangswicklung 40 wird bei der Herstellung der Kappe auf den Kragen 40 aufgebracht, so daß die Garnitur damit lediglich aus zwei Teilen, nämlich dem Formkörper 8 und der Kappe 22 besteht.

In Fig. 2 ist an die Umfangswicklung 40 angrenzend - links der strichpunktierten Linie - eine Umfangswicklung 42 auf dem angrenzenden Abschnitt des Kappenmantels 24 dargestellt. Diese Umfangswicklung 42 wirkt einer radialen Aufweitung der Kappe in dem an die Stirnwand 28 angrenzenden Bereich des Kappenmantels 24 entgegen, wie sie bei hohen Druckkräften auftreten kann.

Die Umfangswicklungen 40 und 42 werden als eine gemeinsame Wicklung bei der Herstellung der Kappe aufgebracht, wobei für die Wicklung 42 im allgemeinen eine einlagige Wicklung aus Kohlenstofasern ausreicht.

Bei der Montage der Kappe in der Ausführungsform nach Fig. 2 kann der Formkörper nach Aufbringen des Klebers über eine auf dem Gewindebolzen 20 aufgebrachte Mutter und eine Unterlegscheibe gegen die Stirnwand der Kappe verspannt werden und anschließend wird die Muffe dann auf das Rohrende aufgesetzt bis die Endfläche 36 des Formkörpers 8 zur Anlage an der Stirnseite der rohrförmigen Wandung 6 des Stabes 2 kommt. Ringwicklungen entsprechend den Ringwicklungen 40 und auch 42 können selbstverständlich auch bei der Ausführungsform nach Fig. 1 statt der Schraubkappe 32 auf dem Kragen 30 und den an die Stirnwand 28 angrenzenden Bereich des Mantels 24 der Kappe 22 aufgebracht werden.

## Patentansprüche

1. Anschlußgarnitur zum axialen Einleiten von Zug- und Druckkräften in Stäbe (2) mit einer rohrförmigen Wandung (6) aus Faserverbundwerkstoff mit wenigstens einer Lage aus achsparallelen unidirektionalen Fasern, mit einem starren rotationssymmetrischen Formkörper (8), der eine axiale Bohrung (18) zur Verankerung eines in der Stabachse liegenden Anschlußelementes (20) und an weinem vom Stab (2) abgewandten Ende eine quer zu seiner Achse gerichtete Endfläche (16) aufweist, und mit einer den Formkörper (8) und das angrenzende Ende des Stabes (2) übergreifenden Kappe (22), in deren quer zur Achse des Stabes gerichteten Stirnwand eine Öffnung zum Durchtritt des Anschlußelementes (20) vorgesehen ist, dadurch gekennzeichnet, daß der Formkörper (8) einen Außendurchmesser entsprechend dem Außendurchmesser der Wandung (6) des Stabes (2) aufweist und mit einer senkrecht zu seiner Achse liegenden Anschlagfläche (10) für das Ende der Wandung des Stabes versehen ist, daß die mit dem Stab (2) zu verklebende Kappe (22) aus mindestens einer Lage eines in einer Kunstharzmatrix eingebetteten Fasergeflechtschlauches gebildet ist, und daß an der Außenseite der Stirnwand (28) der Kapper (22) ein einstückig mit der Kappe ausgebildeter und mit deren Achse koaxialer Kragen (30) vorgesehen ist, dessen Außendurchmesser kleiner ist als der Außendurchmesser der Kappe.

2. Anschlußgarnitur nach Anspruch 1, dadurch gekennzeichnet, daß der Innendurchmesser des Kragens (30) im wesentlichen dem Außendurchmesser des Anschlußelementes (20) entspricht.

3. Anschlußgarnitur nach Anspruch 1, dadurch gekennzeichnet, daß bei einem als Gewindebolzen (20) ausgeildeten Anschlußelement, der Kragen (30) ein diesem entsprechendes Innengewinde aufweist.

4. Anschlußgarnitur nach Anspruch 1, gekennzeichnet, durch eine den Kragen (30) formschlüssig umgreifende Schraubkappe (32) mit einer Ausnehmung, deren axiale Tiefe (x) größer ist als die axiale Länge (x') des Kragens und mit einer axialen Gewindebohrung zum Aufschrauben auf das als Gewindebolzen (20) ausgebildete Anschlußelement.

5. Anschlußgarnitur nach Anspruch 1, dadurch gekennzeichnet, daß außen auf dem Kragen (30) der Kappe (22) eine Umfangswicklung (40) aus in einer Kunstharzmatrix eingebetteten hochfesten Fasern angeordnet ist.

6. Anschlußgarnitur nach Anspruch 5, dadurch gekennzeichnet, daß auf der Außenseite des Mantels (24) der Kappe (22) wenigstens in dem an die Endwand angrenzenden Bereich eine Umfangswicklung (42) aus in einer Kunstharzmatrix eingebetteten hochfesten Fasern angeordnet ist.

7. Anschlußgarnitur nach Anspruch 5 oder 6, dadurch gekennzeichnet, daß die Umfangswicklung (40, 42) aus Kohlenstoffasern besteht.

8. Anschlußgarnitur nach Anspruch 5, dadurch gekennzeichnet, daß der Formkörper (8) an seinem äußeren Ende mit einem zylindrischen Vorsprung (38) dessen Außendurchmesser kleiner ist als der Außendurchmesser der Wandung (6) des Stabes (2) versehen ist.

9. Anschlußgarnitur nach Anspruch 1, dadurch gekennzeichnet, daß der Formkörper (8) als Anschlagfläche mit einer von seinem äußeren Umfang ausgehenden Ringschulter (10) mit einer Breite (b) entsprechend der Dicke der rohrförmigen Wandung des Stabes versehen ist.

## Claims

1. A connecting fitting for the axial introduction of tensile and compressive forces into bars (2) with a tubular wall (6) of fibre composite with at least one layer unidirectional fibres parallel to the axis, having a rigid axially symmetrical shaped body (8) which comprises an axial bore (18) to anchor a connecting element (19) lying in the axis of the bar and, at its end remote from the bar (2), an end face (16) directed transversely to its axis, and having a cap (22) which engages over the shaped body (8) and the adjoining end of the bar (2) and in the end wall of which, directed transversely to the axis of the bar, there is provided an opening for the passage of the connecting element (20), characterised in that the shaped body (8) has an external diameter corresponding to the external diameter of the wall (6) of the bar (2) and is provided with a stop face (10) extending perpendicular to its axis for the end of the wall of the bar, that the cap (22), which is to be adhered to the bar (2), is formed from at least one layer of a fibrous plaited flexible tube embedded in a matrix of synthetic resin, and that provided at the outside of the end wall (28) of the cap (22) is a collar (30) which is made integral with the cap and is coaxial with its axis and the external diameter of which is smaller than the external diameter of the cap.

2. A connecting fitting according to Claim 1, characterised in that the internal diameter of the collar (30) corresponds substantially to the external diameter of the connecting element (20).

3. A connecting fitting according to Claim 1, characterised in that in the case of a connecting element constructed in the form of a threaded bolt (20), the collar (30) has an internal thread corresponding to this.

4. A connecting fitting according to Claim 1, characterised by a screw cap (32) which engages positively round the collar (30) and has a recess, the axial depth (x) of which is greater than the axial length (x') of the collar, and an axial tapped hole for screwing onto the connecting element constructed in the form of a threaded bolt (20).

5. A connecting fitting according to Claim 1, characterised in that a circumferential wrapping (40) of high-strength fibres embedded in a matrix of synthetic resin is disposed externally on the collar (30) of the cap (22).

6. A connecting fitting according to Claim 5, characterised in that a circumferential wrapping (42) of high-strength fibres embedded in a matrix of synthetic resin is disposed at the outside of the side wall (24) of the cap (22), at least in the region adjoining the end wall.

7. A connecting fitting according to Claim 5 or 6, characterised in that the circumferential wrapping (40, 42) consists of carbon fibres.

8. A connecting fitting according to Claim 5 characterised in that the shaped body (8) is provided, at its outer end, with a cylindrical projection (38), the external diameter of which is smaller than the external diameter of the wall (6) of the bar (2).

9. A connecting fitting according to Claim 1, characterised in that the shaped body (8) is provided with an annular shoulder (10) originating from its outer circumference and having a width (b) corresponding to the thickness of the tubular wall of the bar as a stop face.

**Revendications**

1. Garniture de raccord pour exercer axialement des forces de traction et de compression sur des tiges (2) à paroi (6) tubulaire de matériau composite renforcé par des fibres, avec au moins une couche de fibres unidirectionnelles parallèles à l'axe, avec un corps profilé (8) rigide à symétrie de révolution qui comporte un alésage (18) axial pour ancrer un élément de raccord (20) situé dans l'axe de la tige et, à son extrémité située à l'opposé de la tige (2), une surface terminale (16) orientée transversalement par rapport à son axe, et avec un capuchon (22) s'engageant par-dessus le corps profilé (8) et l'extrémité adjacente de la tige (2), dans la paroi frontale duquel orientée transversalement par rapport à l'axe de la tige il est prévu une ouverture pour le passage de l'élément de raccord (20), caractérisée en ce que le corps profilé (8) possède un diamètre extérieur correspondant au diamètre extérieur de la paroi (6) de la tige (2) et est pourvu d'une surface de butée (10) placée perpendiculairement à son axe pour l'extrémité de la paroi de la tige, que le capuchon (22) devant être collé avec la tige (2) est formé d'au moins une couche d'une gaine en fibres entrelacées noyée dans une matrice de résine synthétique, et qu'il est prévu sur le côté extérieur de la paroi frontale (28) du capuchon (22) un collet (30) venu d'une pièce avec le capuchon et coaxial à son axe dont le diamètre extérieur est plus petit que le diamètre extérieur du capuchon.

2. Garniture de raccord selon la revendication 1, caractérisée en ce que le diamètre intérieur du collet (30) correspond essentiellement au diamètre extérieur de l'élément de raccord (20).

3. Garniture de raccord selon la revendication 1, caractérisée en ce que, l'élément de raccord ayant la configuration d'un boulon fileté (20), le collet (30) possède un filet intérieur lui correspondant.

4. Garniture de raccord selon la revendication 1, caractérisée par un bouchon fileté (32) s'engageant par sûreté de formes par-dessus le collet (30) avec un évidement dont la profondeur (x) axiale est plus grande que la longueur (x') axiale du collet et avec un trou fileté axial pour être vissé sur l'élément de raccord à configuration de boulon fileté (20).

5. Garniture de raccord selon la revendication 1, caractérisée en ce qu'un enroulement périphérique (40) de fibres à haute résistance noyées dans une matrice de résine synthétique est disposé extérieurement sur le collet (30) du capuchon (22).

6. Garniture de raccord selon la revendication 5, caractérisée en ce que, sur le côté extérieur du corps (24) du capuchon (22) est disposé au moins dans la partie adjacente à la paroi terminale un enroulement périphérique (42) de fibres de résistance élevée noyées dans une matrice de résine synthétique.

7. Garniture de raccord selon la revendication 5 ou 6, caractérisée en ce que l'enroulement périphérique (40, 42) est constitué par des fibres de carbone.

8. Garniture de raccord selon la revendication 5, caractérisée en ce que le corps profilé (8) est pourvu à son extrémité extérieure d'une saillie (38) cylindrique dont le diamètre extérieur est plus petit que le diamètre extérieur de la paroi (6) de la tige (2).

9. Garniture de raccord selon la revendication 1, caractérisée en ce que le corps profilé (8) est pourvu comme surface de butée d'un épaulement annulaire (10) partant de sa périphérie extérieure ayant une largeur (b) correspondant à l'épaisseur de la paroi tubulaire de la tige.

EP 0 237 046 B1

Fig. 1

Fig. 2